# EUROPEAN PATENT APPLICATION

(11) **EP 4 792 648 A1**
(43) Date of publication of application: **19.08.2026**
(21) Application number: 24877001.8
(22) Date of filing: 18.09.2024
(51) Int. Cl.: A01N 25/00, A01N 25/02, A01N 25/08, A01N 35/02

(54) **HIGH-TEMPERATURE TOLERANCE INDUCER AND METHOD FOR INDUCING HIGH-TEMPERATURE TOLERANCE IN PLANTS**

(30) Priority: 13.10.2023 JP 2023177588
(71) Applicant: AGC Inc., Tokyo 100-8405 (JP)
(72) Inventor: EGUCHI Hajime, Tokyo 100-8405 (JP); SUZUKI Toyokazu, Tokyo 100-8405 (JP)
(74) Representative: TBK
(86) International application number: PCT/JP2024/033281
(87) International publication number: WO 2025/079402

(57) **Abstract**

This high-temperature tolerance inducer for plants contains a carrier having an active ingredient containing at least one compound having a boiling point or sublimation point of 200°C or lower and a hydrophobic compound having a boiling point exceeding 200°C supported on a porous material. The solubility of the hydrophobic compound in water is preferably less than 10 g/100 mL. The hydrophobic compound is preferably at least one compound selected from the group consisting of plant oils, mineral oils, and wax esters. The compound that represents the active ingredient is preferably an unsaturated carbonyl compound.

## Description

### [Technical Field]

The present invention relates to a high-temperature tolerance inducer and a method for inducing high-temperature tolerance in plants.

Priority is claimed on Japanese Patent Application No. 2023-177588, filed October 13, 2023, the content of which is incorporated herein by reference.

### [Background Art]

When agricultural and horticultural plants are exposed to high temperatures, reductions in the quality and yield of the agricultural and horticultural plants tend to occur due to high-temperature injury. Conventionally, the installation of sun shades and/or installation of ventilation fans in agricultural and horticultural greenhouses has been used to prevent high-temperature injury, but these countermeasures are costly and cannot be easily implemented.

Accordingly, the application of high-temperature tolerance inducers to plants is being investigated as a countermeasure that can be easily implemented in a variety of agricultural settings. Patent Document 1 discloses the use of an unsaturated carbonyl compound such as hydroxyacrolein, ethyl vinyl ketone or 2-hexenal as a high-temperature tolerance inducer.

Further, Patent Document 2 discloses a high-temperature tolerance inducer containing a carrier composed of an active ingredient containing at least one compound having a boiling point or sublimation point of 200°C or lower supported on a porous material.

### [Citation List]

### [Patent Documents]

[Patent Document 1]
   Japanese Unexamined Patent Application, First Publication No. 2011-157307
[Patent Document 2] International Patent Publication No. 2023/074526

### [Summary of Invention]

### [Technical Problem]

Investigations by the inventors of the present invention revealed that when a high-temperature tolerance inducer has the active ingredient supported on a porous material, water spraying or rainfall required for plant growth, or use of the inducer by floating on the water surface of a paddy field or the like can cause the active ingredient to dissolve in the water, resulting in a shortening of the duration of the effects. From the viewpoints of achieving favorable retention of the effects of the high-temperature tolerance inducer under high-temperature conditions, as well as improving the water resistance, there remains considerable room for improvement.

The present invention provides a high-temperature tolerance inducer for plants and a method for inducing high-temperature tolerance in plants that exhibit excellent effect persistence even under high-temperature conditions and in environments that involve contact with water.

### [Solution to Problem]

The present invention has the following aspects.
[1] A high-temperature tolerance inducer for plants, containing a carrier having an active ingredient containing at least one compound having a boiling point or sublimation point of 200°C or lower and a hydrophobic compound having a boiling point exceeding 200°C supported on a porous material.
[2] The high-temperature tolerance inducer according to [1], wherein the solubility in water of the hydrophobic compound is less than 10 g/100 mL.
[3] The high-temperature tolerance inducer according to [2], wherein the hydrophobic compound is at least one compound selected from the group consisting of plant oils, mineral oils, and wax esters.
[4] The high-temperature tolerance inducer according to any one of [1] to [3], wherein the compound that represents the active ingredient is an unsaturated carbonyl compound.
[5] The high-temperature tolerance inducer according to any one of [1] to [4], wherein the compound that represents the active ingredient is a compound represented by formula 1 shown below:

   R¹-CH=CH-C(=O)-R² ... Formula 1

   wherein R¹ represents a hydrogen atom, a hydroxyl group or an alkyl group of 1 to 9 carbon atoms, and R² represents a hydrogen atom or an alkyl group of 1 to 5 carbon atoms.
[6] The high-temperature tolerance inducer according to any one of [1] to [5], wherein the compound that represents the active ingredient is 2-hexenal, 2-butenal, 2-pentenal, 2-heptenal, 1-penten-3-one, 3-penten-2-one, 4-hexen-3-one, 3-hepten-2-one, or 2-octen-4-one.
[7] The high-temperature tolerance inducer according to any one of [1] to [6], wherein the porous material is a silica.
[8] The high-temperature tolerance inducer according to [7], wherein the silica is at least one type of silica selected from among porous silica, zeolite, and montmorillonite.
[9] The high-temperature tolerance inducer according to [7], wherein the silica is a silica gel.
[10] The high-temperature tolerance inducer according to any one of [1] to [9], wherein the specific surface area of the porous material is within a range from 100 to 1,000 m²/g.
[11] The high-temperature tolerance inducer according to any one of [1] to [10], wherein the amount of the hydrophobic compound is within a range from 1 to 200% by mass relative to the total mass of the porous material.
[12] The high-temperature tolerance inducer according to any one of [1] to [11], wherein the amount of the active ingredient is within a range from 0.1 to 10% by mass relative to the total mass of the porous material.
[13] A method for inducing high-temperature tolerance in plants, the method including applying the high-temperature tolerance inducer according to any one of [1] to [12] to a plant.
[14] A method for inducing high-temperature tolerance in plants, the method including housing the high-temperature tolerance inducer according to any one of [1] to [12] in a container having an opening or a packaging material having air permeability, and installing the container or the packaging material on the ground surface or water surface in the vicinity of a plant having stomata.
[15] A method for inducing high-temperature tolerance in plants, the method including housing the high-temperature tolerance inducer according to any one of [1] to [12] in a container having an opening or a packaging material having air permeability, and attaching the container or the packaging material to a plant or support.
[16] A method for inducing high-temperature tolerance in plants, the method including scattering the high-temperature tolerance inducer according to any one of [1] to [12] on the ground surface or water surface in the vicinity of a plant.
[17] A method for inducing high-temperature tolerance in plants, the method including affixing the high-temperature tolerance inducer according to any one of [1] to [12] to the surface of a sheet or tape, and installing the sheet or tape on the ground surface or water surface in the vicinity of a plant.
[18] A method for inducing high-temperature tolerance in plants, the method including affixing the high-temperature tolerance inducer according to any one of [1] to [12] to the surface of a sheet or tape, and attaching the sheet or tape to a plant or support.

### [Advantageous Effects of Invention]

The present invention is able to provide a high-temperature tolerance inducer for plants and a method for inducing high-temperature tolerance in plants that exhibit excellent effect persistence even under high-temperature conditions and in environments that involve contact with water.

### [Description of Embodiments]

**In** the present invention, "boiling point" and "sublimation point" values represent values at normal pressure (1 atm).

The expression "to" used to indicate a numerical range means a range that includes the numerical values before and after the "to" as the lower limit and upper limit respectively.

The high-temperature tolerance inducer for plants according to one embodiment of the present invention contains a carrier having an active ingredient containing at least one compound having a boiling point or sublimation point of 200°C or lower and a hydrophobic compound having a boiling point exceeding 200°C supported on a porous material.

### (Active Ingredient)

The active ingredient has an action of inducing high-temperature tolerance in plants.

The active ingredient in embodiments of the present invention is a compound having a boiling point or sublimation point of 200°C or lower (hereinafter also referred to as "compound A"). The compound A within the active ingredient may be composed of one compound or two or more compounds.

Because the compound A has a boiling point or sublimation point of 200°C or lower, the compound is able to volatilize (evaporate or sublimate) under typical plant growth conditions (for example, 0 to 50°C).

The boiling point or sublimation point of the compound A is preferably 175°C or lower, and more preferably 150°C or lower. The lower the boiling point or sublimation point, the more easily the compound volatilizes following application, thereby improving the usability of the present invention.

In terms of the persistence of the effects of the compound A, the boiling point or sublimation point of the compound A is preferably at least 80°C, and more preferably 100°C or higher.

The upper limit and lower limit for the boiling point or sublimation point of the compound A may be combined as appropriate. For example, the boiling point or sublimation point of the compound A is preferably at least 80°C but not more than 200°C, more preferably at least 80°C but not more than 175°C, and even more preferably at least 100°C but not more than 150°C.

The compound A may be liquid or solid at 25°C.

The compound A may be a compound having a boiling point or sublimation point of 200°C or lower selected appropriately from among conventional compounds known as having a high-temperature tolerance inducing action on plants.

Examples of compounds having a high-temperature tolerance inducing action on plants include unsaturated carbonyl compounds such as unsaturated aldehydes and unsaturated ketones. Specific examples of unsaturated carbonyl compounds include those exemplified in Japanese Unexamined Patent Application, First Publication No. 2011-157307 and International Patent Publication No. 2016/031775.

The unsaturated carbonyl compound is preferably a compound represented by formula 1 shown below.

R¹-CH=CH-C(=O)-R² ... Formula 1

In the formula, R¹ represents a hydrogen atom, a hydroxyl group or an alkyl group of 1 to 9 carbon atoms, and R² represents a hydrogen atom or an alkyl group of 1 to 5 carbon atoms.

The alkyl group for each of R¹ and R² may be either linear or branched.

Among the compounds represented by formula 1, compounds in which R¹ is a hydrogen atom or an alkyl group of 1 to 6 carbon atoms, R² is a hydrogen atom or an alkyl group of 1 to 5 carbon atoms, and the sum of the carbon atoms in R¹ and R² is not more than 6 (meaning the total number of carbon atoms is not more than 9) are preferred.

Examples of unsaturated carbonyl compounds having a boiling point or sublimation point of 200°C or lower include 2-hexenal (boiling point: 146°C), 2-butenal (boiling point: 105°C), 2-pentenal (boiling point: 126 to 130°C), 2-heptenal (boiling point: 166°C), 1-penten-3-one (boiling point: 81°C), 3-penten-2-one (boiling point: 123°C), 4-hexen-3-one (boiling point: 137°C), 3-hepten-2-one (boiling point: 156°C), and 2-octen-4-one (boiling point: 178°C).

Other examples of compounds having a high-temperature tolerance inducing action on plants include branched-chain amino acids and intermediates in the biosynthetic pathways and consumption pathways thereof (hereinafter, these compounds may also be jointly referred to as simply "branched-chain amino acids"). Specific examples of these branched-chain amino acids include the compounds disclosed in Japanese Unexamined Patent Application, First Publication No. 2012-197249.

Specific examples of branched-chain amino acids having a boiling point or sublimation point of 200°C or lower include leucine (sublimation point: 145 to 148°C) and α-ketoisovaleric acid (boiling point: 171°C).

The amount of the active ingredient, relative to the total mass of the porous material, is preferably within a range from 0.1 to 10% by mass, and more preferably from 1 to 5% by mass. Provided the amount of the active ingredient is within the range from 0.1 to 10% by mass, the action of the compound in inducing high-temperature tolerance in plants can manifest satisfactorily. The amount of the active ingredient can be determined by extracting the active ingredient from the porous body using a solvent capable of dissolving the active ingredient, and then analyzing the obtained extract by gas chromatography (for example, using a 7890A apparatus manufactured by Agilent Technologies, Inc.).

### (Hydrophobic Compound)

By supporting the hydrophobic compound on the porous material together with the active ingredient, the hydrophobic compound can suppress rapid elution of the active ingredient even in environments in contact with water, enabling a high-temperature tolerance inducer for plants with superior persistence to be obtained. The hydrophobic compound is a different compound from the active ingredient described above.

The hydrophobic compound has a boiling point exceeding 200°C. The boiling point of the hydrophobic compound is preferably at least 250°C, and more preferably 300°C or higher. The higher the boiling point, the less likely the compound is to volatilize after application, and therefore the effect of the compound in suppressing rapid elution of the active ingredient is superior. There are no particular limitations on the upper limit for the boiling point of the hydrophobic compound, but 500°C is one example. The upper limit and lower limit for the boiling point of the hydrophobic compound may be combined as desired. For example, the boiling point of the hydrophobic compound is preferably greater than 200°C but not more than 500°C, more preferably at least 250°C but not more than 500°C, and even more preferably at least 300°C but not more than 500°C. The hydrophobic compound may be liquid or solid at 25°C.

The hydrophobic compound is preferably at least one compound selected from the group consisting of plant oils, mineral oils, and wax esters. Examples of the plant oils include olive oil, linseed oil, corn oil, sesame oil, perilla oil, canola oil, rapeseed oil, butter, rice bran oil, rice oil, palm oil (including hydrogenated palm oil), margarine, soybean oil, and sunflower oil. Examples of the mineral oils include compounds represented by CₙH₂ₙ₊₂ (wherein n is an integer of 10 to 200) or CₙH₂ₙ (wherein n is an integer of 10 to 200). The term "wax esters" means compounds obtained by ester bonding between a long-chain fatty acid of at least 10 carbon atoms and an aliphatic alcohol of at least 8 carbon atoms. Specific examples of these wax esters include waxes (such as soybean wax, palm wax, beeswax and white wax).

The solubility of the hydrophobic compound in water is preferably less than 10 g/100 mL, and more preferably 1 g/100 mL or less. Provided the solubility of the hydrophobic compound in water is less than 10 g/100 mL, rapid elution of the active ingredient can be suppressed even in environments in contact with water. There are no particular limitations on the lower limit for the solubility of the hydrophobic compound in water, but one example is 0.001 g/100 mL. The solubility of the hydrophobic compound in water is preferably at least 0.001 g/100 mL but less than 10 g/100 mL, and more preferably at least 0.001 g/100 mL but not more than 1 g/100 mL.

The solubility of the hydrophobic compound in water can be measured by a dissolved organic carbon concentration (DOC) measurement.

The amount of the hydrophobic compound, relative to the total mass of the porous material, is preferably within a range from 1 to 200% by mass, more preferably from 5 to 50% by mass, even more preferably from 7 to 20% by mass, and particularly preferably from 7 to 9% by mass. Provided the amount of the hydrophobic compound is within the range from 1 to 200% by mass, rapid elution of the active ingredient can be suppressed even in environments in contact with water.

### (Porous Material)

The porous material is a carrier that supports the active ingredient.

The porous material may be a silica. In this description, the term "silica" means a compound containing silicon oxide. Examples of the silica include porous silica such as silica gels, diatomaceous earth, and mesoporous silica, as well as zeolite, montmorillonite, boiling stones, porous glass, kaolinite, sericite, illite, glauconite, chlorite, and talc. The silica is preferably at least one type of silica selected from the group consisting of porous silica, zeolite and montmorillonite, is more preferably a porous silica, and is even more preferably a silica gel.

The high-temperature tolerance inducer may also contain another porous material other than silica. The proportion of silica, relative to the total mass of silica and the other porous material, is preferably at least 50% by mass, more preferably at least 80% by mass, even more preferably at least 90% by mass, and particularly preferably 95% by mass or greater, and an upper limit value of 100% by mass is also possible. The upper limit and lower limit for the proportion of silica may be combined as appropriate. Provided the proportion of silica relative to the total mass of silica and the other porous material falls within the above range, the sustained release properties and stability of the active ingredient tend to be particularly superior.

The specific surface area of the porous material is typically within a range from 100 to 1,000 m²/g. The specific surface area of the porous material is preferably within a range from 200 to 1,000 m²/g, and more preferably from 420 to 1,000 m²/g. Provided the specific surface area of the porous material is within a range from 1 to 3,000 m²/g, the retention rate for the compound A is high, and the effect persistence can be improved. If the specific surface area of the porous material is within the range from 420 to 1,000 m²/g, then the retention rate for the compound A is even higher, and the effect persistence can be improved even further. The specific surface area can be measured using the gas adsorption method. Specifically, using a specific surface area measurement apparatus (product name: 3Flex, manufactured by Shimadzu Corporation), a 100 mg sample is set in the apparatus, and using N₂ as the adsorption gas, the specific surface area is measured under extremely low temperature conditions.

The pore volume of the porous material is, for example, within a range from 0.01 to 10 mL/g, from 0.05 to 3 mL/g, or from 0.1 to 1.7 mL/g. The pore volume is measured using the Barrett-Joyner-Halenda (BJH) method. Specifically, using a pore distribution measurement apparatus (for example, 3Flex manufactured by Shimadzu Corporation), a 100 mg sample is set in the apparatus, and the pore volume is measured under extremely low temperature conditions.

The pore diameter in the porous material is, for example, within a range from 0.5 to 1,000 nm, from 0.5 to 100 nm, or from 1 to 25 nm. The pore diameter is measured using the gas adsorption method. Specifically, using a specific surface area measurement apparatus (for example, 3Flex manufactured by Shimadzu Corporation), a 100 mg sample is set in the apparatus, and the pore diameter is measured under extremely low temperature conditions.

The oil absorption of the porous material is, for example, within a range from 1 to 1,000 mL/100 g, from 10 to 500 mL/100 g, or from 40 to 300 mL/100 g. The oil absorption is measured using the boiled linseed oil method. Specifically, small amounts of the porous material and boiled linseed oil are mixed together, and the amount of boiled linseed oil used per 100 g of the porous material when the mixture reaches a state that can be rolled into a spiral with a spatula is measured and deemed the oil absorption.

There are no particular limitations on the form of the porous material, and examples include particles, blocks, films, pellets and honeycombs. In terms of ease of availability, particles are preferred. Examples of the shape of the particles include spherical shapes such as true spheres and ellipsoids, as well as needles, flakes and amorphous shapes.

In those cases where the porous material is composed of particles, the average particle size of the porous material is, for example, within a range from 0.1 to 1,000 µm, from 4 to 1,000 µm, or from 0.5 to 300 µm. The average particle size is measured using a Coulter counter (for example, a Multisizer 4e manufactured by Beckman Coulter, Inc.).

Among the various types of porous silica, in terms of safety, a silica gel is preferred as the porous material.

The average primary particle size of the silica gel is, for example, within a range from 1 to 3,000 µm, and preferably from 5 to 1,100 µm. The average primary particle size of the silica gel can be controlled by using a sieve shaker or the like.

In those cases where the porous material contains only primary particles, the average primary particle size of the silica gel represents the 50% cumulative volume diameter measured in solution using a particle size distribution meter (for example, a Multisizer 4e manufactured by Beckman Coulter, Inc.).

In those cases where the porous material is a mixture of primary particles and secondary particles, the average primary particle size can be calculated as d = 6/ρ·s (wherein ρ is the density [g/cm³] and s is the specific surface area [cm²/g]). The specific surface area can be measured using the method described below.

The specific surface area of the silica gel is, for example, within a range from 30 to 1,000 m²/g, from 100 to 1,000 m²/g, from 150 to 1,000 m²/g, from 200 to 1,000 m²/g, or from 420 to 1,000 m²/g. The specific surface area of the silica gel can be measured in the same manner as the specific surface area of the porous material.

The pore volume of the silica gel is, for example, within a range from 0.05 to 3 mL/g, from 0.2 to 2.5 mL/g, or from 0.5 to 1.7 mL/g. The pore volume of the silica gel can be measured in the same manner as the pore volume of the porous material.

The pore diameter in the silica gel is, for example, within a range from 0.5 to 100 nm, from 2 to 50 nm, or from 3 to 25 nm. The pore diameter of the silica gel can be measured in the same manner as the pore diameter of the porous material.

The oil absorption of the silica gel is, for example, within a range from 10 to 500 mL/100 g, from 50 to 450 mL/100 g, or from 100 to 300 mL/100 g. The oil absorption of the silica gel can be measured in the same manner as the oil absorption of the porous material.

### (Carrier)

In the carrier, the loading rate of the active ingredient relative to the total mass of the carrier is, for example, preferably within a range from 0.1 to 10% by mass, and more preferably from 1 to 5% by mass. Provided the amount of the active ingredient is within the range from 0.1 to 10% by mass, the action of the active ingredient in inducing high-temperature tolerance in plants can manifest satisfactorily.

The loading rate of the active ingredient can be determined by extracting the active ingredient from the carrier using a solvent capable of dissolving the active ingredient, and then analyzing the obtained extract by gas chromatography (for example, using a 7890A apparatus manufactured by Agilent Technologies, Inc.).

### (Other Components)

The high-temperature tolerance inducer may, if necessary, contain one or more other components besides the active ingredient, the hydrophobic compound and the porous material, provided the effects of the present invention are not impaired.

In those cases where the high-temperature tolerance inducer contains another component, this other component may or may not be supported on the carrier.

Examples of other components include compounds besides the compound A that have an action of inducing high-temperature tolerance in plants (hereinafter referred to as a compound B), antioxidants, coupling agents, and binders.

The compound B is a compound having a boiling point or sublimation point exceeding 200°C.

There are no particular limitations on the ratio between the compound A and the compound B. For example, the amount of the compound A, relative to the combined mass of the compound A and the compound B, may be at least 1% by mass or at least 10% by mass, and an upper limit value of 100% by mass is also possible. The upper limit and lower limit for the proportion of the compound A may be combined as appropriate. Provided the proportion of the compound A relative to the combined mass of the compound A and the compound B is at least as large as the above lower limit, the action that induces high-temperature tolerance in plants can manifest satisfactorily.

### (Method for Producing High-Temperature Tolerance Inducer)

The high-temperature tolerance inducer can be obtained by supporting the active ingredient containing at least one type of the compound A and the hydrophobic compound on the porous material.

There are no particular limitations on the supporting method used, and conventional methods may be employed as appropriate.

For example, the carrier can be obtained using a method in which the active ingredient and the hydrophobic compound are brought into contact with the porous material together with a liquid medium having a boiling point lower than the boiling point or sublimation point of the compound A, and then drying the porous material (removing the liquid medium) at a temperature lower than the boiling point or sublimation point of the compound A. The active ingredient and the hydrophobic compound may be brought into contact with the porous material simultaneously or separately. In those cases where the active ingredient and the hydrophobic compound are brought into contact with the porous material separately, the hydrophobic compound is preferably brought into contact with the porous material after the active ingredient has contacted the porous material.

The liquid medium may be any liquid capable of dissolving or dispersing the active ingredient. The amount used of the liquid medium per 100 parts by mass of the carrier is, for example, within a range from 10 to 10,000 parts by mass, or from 100 to 1,000 parts by mass.

There are no particular limitations on the method used for bringing the active ingredient, the hydrophobic compound and the liquid medium into contact with the porous material, and a conventional method such as dipping or spraying may be used. The contact time may be any time that enables satisfactory impregnation of the porous material with the active ingredient and the hydrophobic compound, and may be adjusted appropriately in accordance with factors such as the size and material of the porous material.

In those cases where the active ingredient and the hydrophobic compound are liquids, the carrier may also be obtained using a method in which only the active ingredient and the hydrophobic compound are brought into contact with the porous material.

If necessary, the obtained carrier may be molded into a desired form together with one or more other components.

In those cases where the carrier is molded into a desired form, there are no particular limitations on the form, and examples include tablets, fine granules, films, blocks, sheets, and tapes having an adhesive layer or the like. The molding method may employ a conventional method.

If necessary, the obtained high-temperature tolerance inducer may be housed inside a container or packaging material used for application to plants.

Following application of the high-temperature tolerance inducer, the compound A volatilizes, and disperses through the air to reach the plant, thereby inducing high-temperature tolerance. Accordingly, in order to enable the volatilized compound A to be released outside the container or packaging material, the container or packaging material preferably either exhibits air permeability, or has one or more openings that connect the interior of the container with the outside.

The container or packaging material may have an attachment member for attaching the container or packaging material to a plant or some form of support.

### (Applications)

The high-temperature tolerance inducer is applied to plants to induce high-temperature tolerance in the plants. By applying the high-temperature tolerance inducer to plants, high-temperature tolerance can be induced in the plants.

High-temperature injury refers to an adverse effect on plant growth caused by high air temperatures.

If agricultural or horticultural plants develop high-temperature injury, the quality and/or yield of the agricultural or horticultural plant deteriorates. Examples of specific types of injury include size reductions, unsatisfactory growth, insufficient sugar content and stalk shortening in head-bearing agricultural or horticultural plants, and malformation and unsatisfactory coloring in flowers.

High-temperature tolerance means a resistance function for counteracting high temperatures.

There are no particular limitations on the types of plants to which the high-temperature tolerance inducer may be applied, provided the compound A is able to induce high-temperature tolerance. In embodiments of the present invention, the plants to which the high-temperature tolerance inducer is applied are typically plants having stomata, and preferably agricultural or horticultural plants. Specific examples of the plants (and particularly agricultural or horticultural plants) include grains (such as rice, barley, wheat, rye, oats and corn), beans (such as soybeans, adzuki beans, broad beans, peas and peanuts), fruit trees and fruits (such as apples, citrus fruits, pears, grapes, peaches, plums, cherries, walnuts, almonds, bananas and strawberries), vegetables (such as cabbage, tomatoes, eggplant, spinach, broccoli, lettuce, onions, leeks and bell peppers), root vegetables (such as carrots, potatoes, sweet potatoes, radishes and turnips), processed crops (such as cotton, hemp, paper mulberry, oriental paperbush, rapeseed, beets, hops, sugarcane, sugar beets, olives, rubber, coffee, tobacco and tea), cucurbits (such as pumpkin, cucumber, watermelon and melon), pasture grasses (such as orchard grass, sorghum, timothy, clover, and alfalfa), lawn grasses (such as Japanese lawn grass and bentgrass), flowers (such as chrysanthemums, roses and orchids), and crops for spices and the like (such as lavender, rosemary, thyme, parsley, pepper and ginger).

The method for inducing high-temperature tolerance according to the present invention includes applying the high-temperature tolerance inducer of the present invention to a plant. Conventional methods may be used as the method for applying the high-temperature tolerance inducer to the plant. One possible method involves housing a silica gel having the active ingredient supported thereon in a container having an opening or a packaging material having air permeability, and then installing the container or packaging material in the vicinity of the plant. In those cases where the high-temperature tolerance inducer is housed inside an aforementioned container having an opening or a packaging material having air permeability, this container or packaging material may also be installed on the ground surface or water surface or the like in the vicinity of a plant. The water surface may be the water surface of a paddy field. In those cases where the container or packaging material has an attachment member mentioned above, the container or packaging material may be attached to the plant or some form of support. The high-temperature tolerance inducer may also be scattered on the ground surface or water surface in the vicinity of the plant, without housing the inducer in a packaging material having air permeability or a container having an opening or the like. The high-temperature tolerance inducer may also be affixed to the surface of a sheet or tape, and the sheet or tape then installed on the ground surface or water surface in the vicinity of a plant. Alternatively, the high-temperature tolerance inducer may also be affixed to the surface of a sheet or tape, and the sheet or tape then attached to the plant or a support.

The application amount of the high-temperature tolerance inducer may be set appropriately in accordance with the type of active ingredient, the temperature, the humidity, the atmospheric pressure, and the optimal concentration for the target plant. For example, in the case of 2-hexenal, the amount is adjusted so that the concentration of the 2-hexenal in the open atmosphere is typically within a range from 0.001 to 0.1 ppm.

The high-temperature tolerance inducer may be used in a mixture with soil or a fertilizer. The mixture with soil or a fertilizer may be installed on the ground surface or within the ground in the vicinity of the plant.

### [Examples]

The present invention is described below in further detail using a series of examples, but the present invention is not limited to the following examples. The symbol "%" indicates "% by mass".

Examples 1 to 6 represent examples of the present invention, whereas Examples 7 and 8 are comparative examples.

### (Examples 1 to 5)

A round-bottom flask was charged with the active ingredient, the porous body and the hydrophobic compound shown in Table 1, as well as 500 parts by mass of dichloromethane per 100 parts by mass of the total solid fraction, and the resulting mixture was stirred at 25°C for one minute. Subsequently, the dichloromethane was evaporated from the reaction liquid using a rotary evaporator to obtain a powdered high-temperature tolerance inducer.
Solid paraffin: Paraffin Wax-135, manufactured by Nippon Seiro Co., Ltd., melting point: 58°C, solubility in water: less than 0.01 g/100 mL
Highly hydrogenated palm oil: manufactured by Yokozeki Oil and Fat Industries Co., Ltd., melting point: 58°C, solubility in water: less than 0.01 g/100 mL

### (Evaluations)

The obtained high-temperature tolerance inducers were evaluated using the evaluation methods described below.

### <Measurement of Active Ingredient Loading Rate>

To a vial containing the high-temperature tolerance inducer was added 5 g of a mixed solvent of chloroform : methanol = 9:1 (volumetric ratio), and the resulting mixture was stirred for one minute to extract the supported 2-hexenal. Hexadecane was added to the extract as an internal standard, and the resulting mixture was filtered. The filtrate (the extract containing the internal standard) was analyzed by gas chromatography, and the 2-hexenal loading (mg) was calculated using a calibration curve prepared in advance using hexadecane as an internal standard. Based on the calculated loading (mg) and the mass of the high-temperature tolerance inducer placed in the vial, the loading rate (%) of 2-hexenal within the high-temperature tolerance inducer (100%) was determined.

### <Measurement of Hydrophobic Compound Loading Rate>

The high-temperature tolerance inducer was heated at 750°C for 30 minutes using a TGA (thermogravimetric analyzer), and the total organic compound content (mg) within the high-temperature tolerance inducer was measured. The total organic compound loading rate (%) within the high-temperature tolerance inducer was calculated from the amount (mg) of the high-temperature tolerance inducer used in the analysis and the determined total organic compound content (mg). The value obtained by subtracting the 2-hexenal loading rate (%) determined as described above in <Measurement of Active Ingredient Loading Rate> from the total organic compound loading rate (%) was deemed the hydrophobic compound loading rate (%).

### <Evaluation of High-Temperature Tolerance>

A vial containing the high-temperature tolerance inducer was left to stand, without a lid, for 7 days in an environment of 50°C and 40% humidity. Following this standing period, the 2-hexenal loading rate (%) was determined in the same manner as described above in <Measurement of Active Ingredient Loading Rate>. The 2-hexenal retention rate was calculated from the formula shown below, and an evaluation was then conducted against the evaluation criteria described below. The "initial 2-hexenal content" included in the formula is the value determined in the above section entitled

### <Measurement of Active Ingredient Loading Rate>.

2-hexenal retention rate (%) = (2-hexenal loading rate (%) after standing for 7 days at 50°C and 40% humidity) / initial 2-hexenal loading rate (%) × 100

### Evaluation criteria

A: 2-hexenal retention rate (%) of 80% or higher
B: 2-hexenal retention rate (%) of at least 10% but less than 80%
C: 2-hexenal retention rate (%) of less than 10%

### <Evaluation of High-Temperature Water Resistance>

The high-temperature tolerance inducer was placed on a standard test sieve with a mesh size of 75 µm, dipped in water for 5 seconds, lifted out of the water, and then left to stand, without a lid, for 7 days in an environment of 50°C and 40% humidity. After this standing period, the 2-hexenal loading rate (%) was determined in the same manner as described above in <Measurement of Active Ingredient Loading Rate>. The 2-hexenal retention rate was calculated from the formula shown below, and an evaluation was then conducted against the evaluation criteria described below. The "initial 2-hexenal content" included in the formula is the value determined in the above section entitled

### <Measurement of Active Ingredient Loading Rate>.

2-hexenal retention rate (%) = (2-hexenal loading rate (%) after standing for 7 days at 50°C and 40% humidity) / initial 2-hexenal loading rate (%) × 100

### Evaluation criteria

a: 2-hexenal retention rate (%) of 50% or higher
b: 2-hexenal retention rate (%) of at least 5% but less than 50%
c: 2-hexenal retention rate (%) of less than 5%

**[Table 1]**

| Example | High-temperature tolerance inducer | | | Evaluation results | |
|---|---|---|---|---|---|
| | Active ingredient | Support (porous body) | Hydrophobic compound | High-temperature tolerance | High-temperature water resistance |
| 1 | 2-hexenal (3%) | Silica gel (80%) | Solid paraffin (13%) | A | a |
| 2 | 2-hexenal (3%) | Silica gel (84%) | Solid paraffin (17%) | A | a |
| 3 | 2-hexenal (3%) | Silica gel (88%) | Solid paraffin (9%) | A | a |
| 4 | 2-hexenal (3%) | Silica gel (90%) | Solid paraffin (7%) | A | a |
| 5 | 2-hexenal (3%) | Silica gel (95%) | Solid paraffin (2%) | A | b |
| 6 | 2-hexenal (3%) | Silica gel (88%) | Highly hydrogenated palm oil (9%) | A | a |
| 7 | 2-hexenal (3%) | Silica gel (97%) | none | A | c |
| 8 | 2-hexenal (3%) | none | Trioxane (97%) | C | c |

In the case where the high-temperature tolerance inducer of Example 7 which did not use a hydrophobic compound was used, the high-temperature water resistance evaluation result was poor.

In the case where the high-temperature tolerance inducer of Example 8 which did not use a porous body was used, the high-temperature tolerance evaluation result was poor.

In contrast, in those cases where the high-temperature tolerance inducers of Examples 1 to 6, each of which used a porous body and a hydrophobic compound, were used, the evaluation results were favorable.

### <High-Temperature Tolerance Evaluation 1 (Rice Plants)>

First, 0.2 g of the high-temperature tolerance inducer from Example 3 was added to and mixed thoroughly with 4 L of HB-101 potting soil manufactured by Flora Co., Ltd., and the resulting mixture was placed in a 5 L bucket. Water was added to the bucket until the water surface was at least 5 cm higher than the surface of the mixture, and two rice plant seedlings were planted in this mixture as Example 11 (test site: Tokyo, April 27, 2024). On the other hand, a Comparative Example 11 was conducted by placing only 4 L of the HB-101 potting soil manufactured by Flora Co., Ltd. in another 5 L bucket, adding water to the bucket until the water surface was at least 5 cm higher than the surface of the potting soil, and then planting two rice plant seedlings in the potting soil. Subsequently, the Example 11 and Comparative Example 11 were both watered once per day, and from May 11, a mixture prepared by diluting 800 mL of Hyponex raw liquid manufactured by Hyponex Japan Corporation Ltd. to the prescribed concentration with water was applied once per week to each bucket. Further, until July 30, the state wherein the water surface was at least 5 cm higher than the surface of the mixture or potting soil was maintained. Between May 11 and July 30, a total of 0.03 g of the high-temperature tolerance inducer of Example 3 was added in four separate portions to the water of Example 11. Subsequently, watering was halted for three days, and then water was once again added to maintain the water-immersed state.

When the numbers of emerging ears were counted on September 7, the results revealed 37 ears in Example 11 and 21 ears in Comparative Example 11. Despite being exposed to the high temperatures of summer, the number of emerging ears in Example 11, which had been treated with the high-temperature tolerance inducer of Example 3, was more than 70% greater than the untreated Comparative Example 11.

### <High-Temperature Tolerance Evaluation 2 (Bell Pepper)>

First, 15 L of HB-101 potting soil manufactured by Flora Co., Ltd. was placed in a planter (length: 650 mm × width: 225 mm × height: 180 mm), one seedling of bell pepper (variety: sun bell pepper) was planted in the soil, and 0.004 g of the high-temperature tolerance inducer of Example 3 was then scattered on top of the soil as Example 12 (test site: Tokyo, July 20, 2024). On the other hand, a Comparative Example 12 was conducted by planting a seedling in another planter in the same manner but without scattering the high-temperature tolerance inducer of Example 3. Subsequently, the Example 12 and Comparative Example 12 were both watered once per day, and from August 3, a mixture prepared by diluting 800 mL of Hyponex raw liquid manufactured by Hyponex Japan Corporation Ltd. to the prescribed concentration with water was applied once per week to each planter. Between August 3 and September 7, a total of 0.02 g of the high-temperature tolerance inducer of Example 3 was scattered in three separate applications on the surface of the soil in Example 12.

When the numbers of fruits were counted on September 7, the results revealed 17 in Example 12 and 13 in Comparative Example 12, with the number of fruits in Example 12 which had been treated with the high-temperature tolerance inducer of Example 3 being approximately 30% greater than the untreated Comparative Example 12. Further, the leaves of the plant of Example 12 were also observed as being more resistant to wilting during the high temperatures of summer.

### <High-Temperature Tolerance Evaluation 3 (Mini Tomatoes)>

First, 0.8 g of the high-temperature tolerance inducer from Example 3 was added to and mixed thoroughly with 15 L of HB-101 potting soil manufactured by Flora Co., Ltd., and the resulting mixture was placed in a planter (length: 650 mm × width: 225 mm × height: 180 mm). Subsequently, one mini tomato (variety: CF Choco Aiko) seedling was planted in this mixture as Example 13 (test site: Tokyo, May 3, 2024). On the other hand, a Comparative Example 13 was conducted by placing 15 L of only the HB-101 potting soil manufactured by Flora Co., Ltd. in another planter, and then planting a similar seedling in the soil. Subsequently, the Example 13 and Comparative Example 13 were both watered once per day, and from May 18, a mixture prepared by diluting 800 mL of Hyponex raw liquid manufactured by Hyponex Japan Corporation Ltd. to the prescribed concentration with water was applied once per week to each planter. Between May 18 and July 21, a total of 0.03 g of the high-temperature tolerance inducer of Example 3 was scattered in four separate applications on the surface of the soil in Example 13.

The number of fruit harvested up until July 21 was 65 in Example 13 and 48 in Comparative Example 13, with the number of fruits in Example 13 which had been treated with the high-temperature tolerance inducer of Example 3 being approximately 30% greater than the untreated Comparative Example 13. Further, the period for which the plant flowered was more than 20 days longer in Example 13 than Comparative Example 13, and the stem was more than 5 cm larger.

### <High-Temperature Tolerance Evaluation 4 (Strawberries)>

First, 15 L of HB-101 potting soil manufactured by Flora Co., Ltd. was placed in a planter (length: 650 mm × width: 225 mm × height: 180 mm). Two runner seedlings obtained from a 2022 strawberry plant (variety: Akihime) were planted in the soil as Example 14 (test site: Tokyo, October 21, 2023). A black agricultural multisheet was installed on top of the potting soil. Subsequently, the seedlings were watered once per day, and from November 4, a mixture prepared by diluting 800 mL of Hyponex raw liquid manufactured by Hyponex Japan Corporation Ltd. to the prescribed concentration with water was applied once per week to the seedlings. Fruit developed on the plants from February 2024 until March 2024, but once fruit stopped being produced, a total of 0.03 g of the high-temperature tolerance inducer of Example 3 was scattered in three separate applications on top of the black agricultural multisheet between April 27, 2024 and July 13, 2024. No fruit developed after May 2023, but by applying the high-temperature tolerance inducer of Example 3, 10 sweet fruits develop between May 19, 2024 and July 13, 2024.

### <Evaluation of Algae Resistance>

First, 0.2 g samples of the high-temperature tolerance inducers of Examples 3 and 7 were each added to and mixed thoroughly with 4 L of HB-101 potting soil manufactured by Flora Co., Ltd., and the resulting mixture was placed in a 5 L bucket. Water was added to the mixture, and two rice plant seedlings were planted. Subsequently, the seedlings were watered once per day to maintain a water-immersed state, and on day 15, a visual assessment was made as to whether or not algae had grown.

Further, the result for the same potting soil with no added high-temperature tolerance inducer was also recorded as reference data.

### Evaluation criteria

X: no algae growth
Y: algae growth

In the case where the high-temperature tolerance inducer of Example 7 containing no hydrophobic compound was used, and the case where no high-temperature tolerance inducer was added, the algae resistance evaluation result was Y.

In contrast, in the case where the high-temperature tolerance inducer of Example 3 containing a porous body and a hydrophobic compound was used, the algae resistance evaluation result was X.

### [Industrial Applicability]

The high-temperature tolerance inducer of the present invention exhibits excellent effect persistence, even under high-temperature conditions and in environments in contact with water. Accordingly, by installing the high-temperature tolerance inducer of the present invention on the ground surface or water surface or the like in the vicinity of a plant having stomata, either directly or within an arbitrary formulation, or by attaching the high-temperature tolerance inducer to the plant or an arbitrary support, reductions in the quality and yield of the plant can be prevented.

## Claims

1. A high-temperature tolerance inducer for plants, comprising a carrier having an active ingredient containing at least one compound having a boiling point or sublimation point of 200°C or lower and a hydrophobic compound having a boiling point exceeding 200°C supported on a porous material.

2. The high-temperature tolerance inducer according to Claim 1, wherein a solubility in water of the hydrophobic compound is less than 10 g/100 mL.

3. The high-temperature tolerance inducer according to Claim 2, wherein the hydrophobic compound is at least one compound selected from the group consisting of plant oils, mineral oils, and wax esters.

4. The high-temperature tolerance inducer according to any one of Claims 1 to 3, wherein the compound that represents the active ingredient is an unsaturated carbonyl compound.

5. The high-temperature tolerance inducer according to Claim 4, wherein the compound that represents the active ingredient is a compound represented by formula 1 shown below:
R¹-CH=CH-C(=O)-R² ... Formula 1
wherein R¹ represents a hydrogen atom, a hydroxyl group or an alkyl group of 1 to 9 carbon atoms, and R² represents a hydrogen atom or an alkyl group of 1 to 5 carbon atoms.

6. The high-temperature tolerance inducer according to Claim 5, wherein the compound that represents the active ingredient is 2-hexenal, 2-butenal, 2-pentenal, 2-heptenal, 1-penten-3-one, 3-penten-2-one, 4-hexen-3-one, 3-hepten-2-one, or 2-octen-4-one.

7. The high-temperature tolerance inducer according to any one of Claims 1 to 3, wherein the porous material is a silica.

8. The high-temperature tolerance inducer according to Claim 7, wherein the silica is at least one type of silica selected from among porous silica, zeolite, and montmorillonite.

9. The high-temperature tolerance inducer according to Claim 7, wherein the silica is a silica gel.

10. The high-temperature tolerance inducer according to any one of Claims 1 to 3,
wherein a specific surface area of the porous material is within a range from 100 to 1,000 m²/g.

11. The high-temperature tolerance inducer according to any one of Claims 1 to 3,
wherein an amount of the hydrophobic compound is within a range from 1 to 200% by mass relative to a total mass of the porous material.

12. The high-temperature tolerance inducer according to any one of Claims 1 to 3,
wherein an amount of the active ingredient is within a range from 0.1 to 10% by mass relative to a total mass of the porous material.

13. A method for inducing high-temperature tolerance in plants, the method comprising applying the high-temperature tolerance inducer according to any one of Claims 1 to 3 to a plant.

14. A method for inducing high-temperature tolerance in plants, the method comprising housing the high-temperature tolerance inducer according to any one of Claims 1 to 3 in a container having an opening or a packaging material having air permeability, and installing the container or the packaging material on a ground surface or water surface in a vicinity of a plant having stomata.

15. A method for inducing high-temperature tolerance in plants, the method comprising housing the high-temperature tolerance inducer according to any one of Claims 1 to 3 in a container having an opening or a packaging material having air permeability, and attaching the container or the packaging material to a plant or a support.

16. A method for inducing high-temperature tolerance in plants, the method comprising scattering the high-temperature tolerance inducer according to any one of Claims 1 to 3 on a ground surface or water surface in a vicinity of a plant.

17. A method for inducing high-temperature tolerance in plants, the method comprising affixing the high-temperature tolerance inducer according to any one of Claims 1 to 3 to a surface of a sheet or tape, and installing the sheet or tape on a ground surface or water surface in a vicinity of a plant.

18. A method for inducing high-temperature tolerance in plants, the method comprising affixing the high-temperature tolerance inducer according to any one of Claims 1 to 3 to a surface of a sheet or tape, and attaching the sheet or tape to a plant or a support.
